# EUROPEAN PATENT APPLICATION

(11) **EP 4 425 867 A1**
(43) Date of publication of application: **04.09.2024**
(21) Application number: 23159857.4
(22) Date of filing: 03.03.2023
(51) Int. Cl.: H04L 41/0895, H04L 41/5054, H04L 43/0882, H04L 43/0888

(54) **DYNAMIC DEPLOYMENT OF VIRTUALIZED NETWORK SERVICES**

(71) Applicant: Deutsche Telekom AG, 53113 Bonn (DE)
(72) Inventor: ADAMS, Martin, 52146 Würselen (DE); SCHATZMAYR, Rainer, 53229 Bonn (DE)
(74) Representative: RDL Patentanwälte PartG mbB

(57) **Abstract**

A method for deploying a virtualized network service, wherein a virtualized network service is deployed at a determined node of a communication network to be executed by the determined node, a backend server for a communication network and a computer program product.

## Description

The invention relates to a method for deploying a virtualized network service, wherein a virtualized network service is deployed at a determined node of a communication network to be executed by the determined node. The invention further relates to a backend node for a communication network and a computer program product.

Different embodiments of the above-mentioned method are known in the state of the art and used for deploying a virtualized network service at a determined node of a communication network. The communication network comprises a plurality of nodes linked to each other wherein a node comprises at least one computing device, usually a plurality of computing devices. While the nodes are arranged spatially distant from each other the computing devices of a single node are arranged close to each other, e.g., in the same building.

The term node may particularly indicate a single computing device of a node of the communication network. Insofar, determining the node particularly comprises determining a computing device of a node of the communication network.

A node usually executes a plurality of virtual machines, e.g., software containers to be accessed via a hypervisor being also executed by the node. The virtualized network service, herein, is generally considered as an executable software module executable by any node of the communication network and to be executed by a determined node of the communication network.

The executable software module abstracts a physical resource, e.g., a hardware component, for instance a hub, a router, a switch and further network components, a digital storage, a computing device and the like, or a software application, for instance a domain name server, a firewall, a streaming platform, a messaging platform, a trading platform and the like.

The communication network provides a plurality of virtualized network functions which are directly or indirectly used by a plurality of clients linked to the communication network, e.g., terminal devices connected to an access node of the communication network.

As the clients are substantially independent from each other, a load distribution in the communication network may vary strongly over time, the variations resulting both in temporary or permanent local overload situations and/or local idle situations of the communication network. As a consequence, both an operational efficiency of the communication network and a functionality of the virtualized service functions may be adversely affected.

It is, therefore, an object of the invention to suggest a method for deploying a virtualized network service which allows for an optimal load balancing within the communication network and an optimal performance of the virtualized network services provided by the communication network at any time. Further objects of the invention are providing a backend node for a communication network and a computer program product.

An aspect of the invention is a method for deploying a virtualized network service, wherein a virtualized network service is deployed at a determined node of a communication network to be executed by the determined node. The node is determined among a plurality of nodes of the communication network which are configured for executing the virtualized network service. The virtualized network service is a software module abstracting a hardware component or a software application provided by the communication network. Deploying the virtualized network service generally means making the virtualized network service run.

According to the invention, a deployment service provided by a backend node of the communication network determines the node dependent on a current state of the communication network and on current requirements of clients using the virtualized network service and causes the virtualized network service to be deployed automatically. The backend node is a core component of the communication network. The deployment service is executed permanently by the core node as a basic service of the communication network. The current state of the communication network and the current requirements of the clients using the virtualized network service allow for deciding which node of the communication network the virtualized network service is optimally deployed.

The current state of the communication network comprises current loads of the plurality of nodes of the communication network and current loads of links of the communication network between the nodes and links between each client and the communication network.

The current state of the requirements of the clients comprises network conditions currently required by the clients, i.e., necessary for a proper cooperation of the clients with the virtualized network service. For instance, the network conditions comprise round trip times, RTT, provided by the communication network and/or transmission rates provided by the communication network.

Both the current network status and the requirements of the clients are taken into account by the deployment service for determining the node the virtualized network service is automatically deployed at. Determination of the node means selection of the optimal node from the plurality of nodes of the communication network which meets the requirements of the clients and avoids any overload and/or detrimental load imbalance of the communication network.

Due to the deployment service the communication network immediately, i.e., essentially in real-time, adapts to a varying state of the communication network and/or varying requirements of the clients. Thus, the communication network is maintained in a balanced state at any time.

In an embodiment, a user plane function, UPF, of a 5G cellular network, a virtual private network, VPN, hub, a data center, DC, a central teleconference component and/or a network function is deployed as the virtualized network service. While the UPF is provided by a cellular network as the communication network, the VPN hub, the DC and the central teleconference component are not limited to cellular networks. Particularly, the VPN hub, the DC and the central teleconference component may form part of an IP multimedia subsystem, IMS, of the communication network.

The current state may comprise an availability of each node of the communication network, a capacity or load of each node of the communication network, a capacity or load of each link of the communication network, a power consumption of the communication network and/or a regulatory constraint concerning the communication network. The availability may take into account a maintenance time of the node when the node is offline for maintenance. The current load of a node or a link dynamically varies over time while the current capacity of a node or a link depends on respective hardware configurations, e.g., a number, a type and/or a size of computing devices of the node and a number and/or a size of glass fibers or cables.

The current capacity, hence, is rather static and strongly depends on economical considerations. Increasing a capacity of a node or a link requires an investment of time of money. However, prices for hardware components are decreasing which economically allows for a generous hardware configuration, i.e., an intentional overcapacity of any node of the communication network.

The more capacity a node or a link has the more degrees of freedom there are in determining the node for deploying the virtualized network service, the better the deployment service adapts the communication network to any dynamic variation of the state.

It is noted that the capacity of a node or a link may also be decreased in case a load of the node or the link will certainly be and stay lower in the future.

The current requirements may comprise a maximum topological distance of the clients from the virtualized network service, a contracted or current latency, a contracted or current bit rate, a contracted or current priority and/or a contracted or current data throughput of the clients. The topological distance corresponds to a number of hops, i.e. links, from the client to the virtualized network function. Contracted items generally indicate items to be guaranteed due to a subscription associated with a client. The latency and/or the bit rate are strongly correlated to a quality of service, QoS, provided by the communication network. The data throughput is strongly correlated to a transmission data rate caused by the clients using the virtualized network function.

Preferably, deploying comprises moving the virtualized network service from a previous node to the determined node, creating a new instance of the virtualized network service at the determined node, joining the virtualized network service with another virtualized network service at the determined node, removing the virtualized network service from the determined node and/or configuring the virtualized network service. The deployment of the virtualized network service shall be generally understood as a change concerning the virtualized network service, the change comprising an installation and operation, a configuration, and a removal of the virtualized network service. The installation and operation reduces a remaining capacity of the node while the removal increases a remaining capacity of the node. The configuration changes the operation of the virtualized network service while the joining reduces a number of equal but separate instances of the same virtualized network service.

An artificial neural network of the deployment service advantageously determines the node. The artificial neural network continuously evaluates data indicating the current state of the communication network and/or the current requirements of the clients detecting a predetermined pattern in the data and determines the node dependent on the detected pattern.

The deployment service may determine the node dependent on a predicted state of the communication network and on predicted requirements of the clients using the virtualized network service, the predictions resulting from historic time series stored in a repository of the deployment service. The historic time series comprise a chronological development of the state of the communication network and requirements of the clients and comprise periodic patterns, e.g., an hourly, daily, weekly, seasonal or yearly recurrent load variation of the nodes and/or links of the communication network. The recurrent load variations allow for anticipating a future state of the communication network and/or a future requirement of the clients and deploying the virtualized network function preventively. Thus, a possible future overload situation or idle time situation of the communication network is reliably avoided.

Preferably, the deployment service determines the node dependent on a complete topology of the communication network and on capacities of each link of the communication network, the topology and the capacities being stored in a repository of the deployment service, respectively. The repository stores static data concerning hardware components of the communication network, e.g., a topology of the communication network, a number and arrangement of the nodes, a number, a type and a size of hardware components of a node, or a number and arrangement of the links, a number, a type and a size of hardware components of each link.

A monitoring module of the deployment service may repeatedly detect the current state of the communication network and the current state of the virtualized network service and determine the node when a change of the current state of the communication network or the current state of the virtualized network service is detected. The monitoring module monitors the communication network and receives data concerning the communication network and the clients, e.g. requirements and subscriptions, linked to the communication network.

In an embodiment, repeatedly detecting comprises detecting on demand and/or detecting periodically. The monitoring module may receive the data on demand, i.e., manually caused by an operator of the communication network and/or at predetermined time intervals, e.g., hours, days, months, seasons and/or years.

The virtualized network service is particularly deployed when the determined node is different from a previous node. The virtualized network service is moved from the previous node to the determined node, e.g., due to a change of the clients using the virtual network service or a maintenance time or an overload situation of the previous node.

Advantageously, a computing device of a cloud infrastructure or a computing device of an edge cloud is determined as the node. The cloud infrastructure comprises a plurality of different hardware components. The edge cloud is a cloud infrastructure near an access node of the communication network, i.e., close to the clients linked to the communication network.

In many embodiments, a plurality of virtualized network services is deployed at respective determined nodes. In other words, the deployment service simultaneously handles the plurality of the virtualized network services in order to maintain a load of the communication network balanced and a performance of the communication network and the virtual network services high at any time.

Another aspect of the invention is a backend node for a communication network. The backend node is a core component of the communication network for operating the communication network.

According to the invention, the backend node is configured for providing a deployment service carrying out a method according to an embodiment of the invention. Due to the deployment service the core component maintains a load of the communication network balanced and a performance of the virtualized network services provided by the communication network high at any time.

A third aspect of the invention is a computer program product, comprising a digital storage medium storing a program code. The storage medium be configured as a random access memory, RAM, a harddisk, HD, a compact disk, CD, a digital versatile disk, DVD, a universal serial bus, USB, storage device, a data center, DC, and the like.

According to the invention, the program code causes a computing device to carry out a method according to an embodiment of the invention as the deployment service of the communication network when being executed by a processor of the computing device. The computer program product may be used for installing the deployment service on the computing device to be executed thereon or for the deployment service to be executed immediately from the computer program product. Independent of the usage the computing device is enabled for providing the deployment service as a backend node of the communication device.

An essential advantage of the inventive method is that the method allows for an optimal load balancing within the communication network and an optimal performance of the virtualized network services provided by the communication network at any time. Accordingly, the clients continuously benefit from an optimal configuration of the communication network as a whole.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

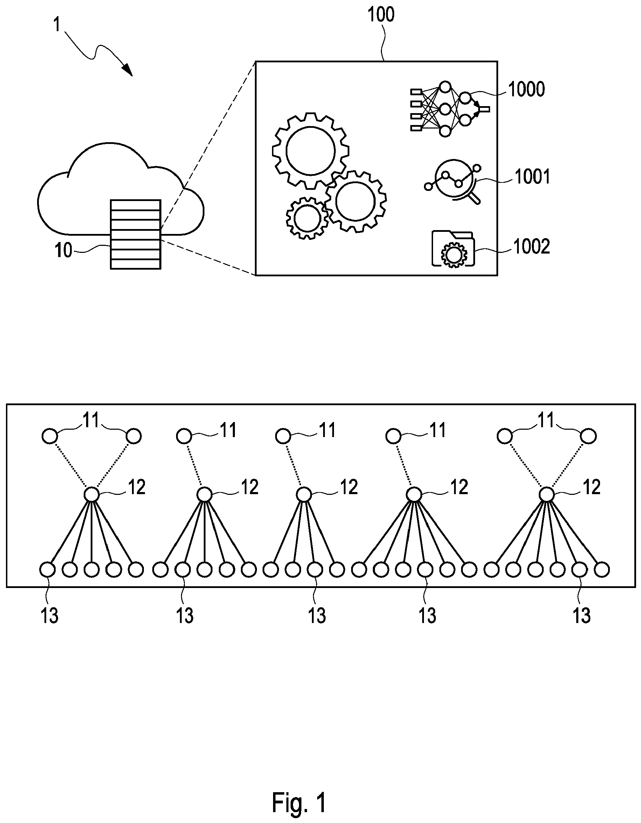

- Fig. 1: schematically shows a communication network with a backend node according to an embodiment of the invention.

Fig. 1 schematically shows a communication network 1 with a backend node 10 according to an embodiment of the invention. The communication network 1 further comprises a plurality of nodes 12 and provides a plurality of virtualized network services 11 to be distributed over the nodes 12 and executed by the nodes 12. The virtualized network services 11 may be connected to and used by a plurality of clients 13.

The backend node 10 is adapted for the communication network 1 and configured for providing a deployment service 100 carrying out a method according to the invention as follows for deploying a virtualized network service 11.

The deployment service 100 may be implemented by means of a computer program product. The computer program product comprises a digital storage medium storing a program code. The program code causes a computing device to carry out the inventive method as the deployment service 100 of the communication network 1 when being executed by a processor of the computing device.

The virtualized network service 11 is deployed at a determined node 12 of a communication network 1 to be executed by the determined node 12. The virtualized network service 11 particularly is deployed when the determined node 12 is different from a previous node 12.

For example, a user plane function, UPF, of a 5G cellular network, a virtual private network, VPN, hub, a data center, DC, a central teleconference component and/or a network function is deployed as the virtualized network service 11.

The deployment service 100 provided by a backend node 10 of the communication network 1 determines the node 12 dependent on a current state of the communication network 1 and on current requirements of clients 13 using the virtualized network service 11. An artificial neural network 1000 of the deployment service 100 may determine the node 12. For instance, a computing device of a cloud infrastructure or a computing device of an edge cloud is determined as the node 12.

A monitoring module 1001 of the deployment service 100 may repeatedly detect the current state of the communication network 1 and the current state of the virtualized network service 11 and determines the node 12 when a change of the current state of the communication network 1 or the current state of the virtualized network service 11 is detected. Repeatedly detecting preferably comprises detecting on demand and/or detecting periodically.

The deployment service 100 preferably determines the node 12 dependent on a predicted state of the communication network 1 and on predicted requirements of the clients 13 using the virtualized network service 11, the predictions resulting from historic time series stored in a repository 1002 of the deployment service 100.

The deployment service 100 may determine the node 12 further dependent on a complete topology of the communication network 1 and on capacities of each link of the communication network 1, the topology and the capacities being stored in a repository 1002 of the deployment service 100, respectively.

The current state may comprise an availability of each node 12 of the communication network 1, a capacity or load of each node 12 of the communication network 1, a capacity or load of each link of the communication network 1, a power consumption of the communication network 1 and/or a regulatory constraint concerning the communication network 1.

The current requirements may comprise a maximum topological distance of the clients 13 from the virtualized network service 11, a contracted or current latency, a contracted or current bit rate, a contracted or current priority and/or a contracted or current data throughput of the clients 13.

The deployment service 100 causes the virtualized network service 11 to be deployed automatically.

Deploying preferably comprises moving the virtualized network service 11 from a previous node 12 to the determined node 12, creating a new instance of the virtualized network service 11 at the determined node 12, joining the virtualized network service 11 with another virtualized network service 11 at the determined node 12, removing the virtualized network service 11 from the determined node 12 and/or configuring the virtualized network service 11.

Usually, a plurality of virtualized network services 11 is deployed at respective determined nodes 12.

### Reference numerals

- 1: communication network
- 10: backend node
- 100: deployment service
- 1000: artificial neural network
- 1001: monitoring module
- 1002: repository
- 11: virtualized network service
- 12: node
- 13: client

## Claims

1. A method for deploying a virtualized network service (11), wherein
- a virtualized network service (11) is deployed at a determined node (12) of a communication network (1) to be executed by the determined node (12);
- a deployment service (100) provided by a backend node (10) of the communication network (1) determines the node (12) dependent on a current state of the communication network (1) and on current requirements of clients (13) using the virtualized network service (11) and causes the virtualized network service (11) to be deployed automatically.

2. The method according to claim 1, wherein a user plane function, UPF, of a 5G cellular network, a virtual private network, VPN, hub, a data center, DC, a central teleconference component and/or a network function is deployed as the virtualized network service (11).

3. The method according to claim 1 or 2, wherein the current state comprises an availability of each node (12) of the communication network (1), a capacity or load of each node (12) of the communication network (1), a capacity or load of each link of the communication network (1), a power consumption of the communication network (1) and/or a regulatory constraint concerning the communication network (1).

4. The method according to one of claims 1 to 3, wherein the current requirements comprise a maximum topological distance of the clients (13) from the virtualized network service (11), a contracted or current latency, a contracted or current bit rate, a contracted or current priority and/or a contracted or current data throughput of the clients (13).

5. The method according to one of claims 1 to 4, wherein deploying comprises moving the virtualized network service (11) from a previous node (12) to the determined node (12), creating a new instance of the virtualized network service (11) at the determined node (12), joining the virtualized network service (11) with another virtualized network service (11) at the determined node (12), removing the virtualized network service (11) from the determined node (12) and/or configuring the virtualized network service (11).

6. The method according to one of claims 1 to 5, wherein an artificial neural network (1000) of the deployment service (100) determines the node (12).

7. The method according to one of claims 1 to 6, wherein the deployment service (100) determines the node (12) dependent on a predicted state of the communication network (1) and on predicted requirements of the clients (13) using the virtualized network service (11), the predictions resulting from historic time series stored in a repository (1002) of the deployment service (100).

8. The method according to one of claims 1 to 7, wherein the deployment service (100) determines the node (12) dependent on a complete topology of the communication network (1) and on capacities of each link of the communication network (1), the topology and the capacities being stored in a repository (1002) of the deployment service (100), respectively.

9. The method according to one of claims 1 to 8, wherein a monitoring module (1001) of the deployment service (100) repeatedly detects the current state of the communication network (1) and the current state of the virtualized network service (11) and determines the node (12) when a change of the current state of the communication network (1) or the current state of the virtualized network service (11) is detected.

10. The method according to claim 9, wherein repeatedly detecting comprises detecting on demand and/or detecting periodically.

11. The method according to one of claims 1 to 10, wherein the virtualized network service (11) is deployed when the determined node (12) is different from a previous node (12).

12. The method according to one of claims 1 to 11, wherein a computing device of a cloud infrastructure or a computing device of an edge cloud is determined as the node (12).

13. The method according to one of claims 1 to 13, wherein a plurality of virtualized network services (11) is deployed at respective determined nodes (12).

14. A backend node (10) for a communication network (1), being configured for providing a deployment service (100) carrying out a method according to one of claims 1 to 13.

15. A computer program product, comprising a digital storage medium storing a program code, the program code causing a computing device to carry out a method according to one of claims 1 to 13 as the deployment service (100) of the communication network (1) when being executed by a processor of the computing device.

## Amended claims

### Amended claims in accordance with Rule 137(2) EPC.

1. A method for deploying a virtualized network service (11), wherein
- a virtualized network service (11) is deployed at a determined node (12) of a communication network (1) to be executed by the determined node (12);
- an artificial neural network (1000) of a deployment service (100) provided by a backend node (10) of the communication network (1) determines the node (12) dependent on a current state of the communication network (1) and on current requirements of clients (13) using the virtualized network service (11) and dependent on a predicted state of the communication network (1) and on predicted requirements of the clients (13) using the virtualized network service (11), the predictions resulting from historic time series stored in a repository (1002) of the deployment service (100), and causes the virtualized network service (11) to be deployed automatically.

2. The method according to claim 1, wherein a user plane function, UPF, of a 5G cellular network, a virtual private network, VPN, hub, a data center, DC, a central teleconference component and/or a network function is deployed as the virtualized network service (11).

3. The method according to claim 1 or 2, wherein the current state comprises an availability of each node (12) of the communication network (1), a capacity or load of each node (12) of the communication network (1), a capacity or load of each link of the communication network (1), a power consumption of the communication network (1) and/or a regulatory constraint concerning the communication network (1).

4. The method according to one of claims 1 to 3, wherein the current requirements comprise a maximum topological distance of the clients (13) from the virtualized network service (11), a contracted or current latency, a contracted or current bit rate, a contracted or current priority and/or a contracted or current data throughput of the clients (13).

5. The method according to one of claims 1 to 4, wherein deploying comprises moving the virtualized network service (11) from a previous node (12) to the determined node (12), creating a new instance of the virtualized network service (11) at the determined node (12), joining the virtualized network service (11) with another virtualized network service (11) at the determined node (12), removing the virtualized network service (11) from the determined node (12) and/or configuring the virtualized network service (11).

6. The method according to one of claims 1 to 5, wherein the deployment service (100) determines the node (12) dependent on a complete topology of the communication network (1) and on capacities of each link of the communication network (1), the topology and the capacities being stored in a repository (1002) of the deployment service (100), respectively.

7. The method according to one of claims 1 to 6, wherein a monitoring module (1001) of the deployment service (100) repeatedly detects the current state of the communication network (1) and the current state of the virtualized network service (11) and determines the node (12) when a change of the current state of the communication network (1) or the current state of the virtualized network service (11) is detected.

8. The method according to claim 7, wherein repeatedly detecting comprises detecting on demand and/or detecting periodically.

9. The method according to one of claims 1 to 8, wherein the virtualized network service (11) is deployed when the determined node (12) is different from a previous node (12).

10. The method according to one of claims 1 to 9, wherein a computing device of a cloud infrastructure or a computing device of an edge cloud is determined as the node (12).

11. The method according to one of claims 1 to 10, wherein a plurality of virtualized network services (11) is deployed at respective determined nodes (12).

12. A backend node (10) for a communication network (1), being configured for providing a deployment service (100) carrying out a method according to one of claims 1 to 11.

13. A computer program product, comprising a digital storage medium storing a program code, the program code causing a computing device to carry out a method according to one of claims 1 to 11 as the deployment service (100) of the communication network (1) when being executed by a processor of the computing device.
